(19) Europäisches Patentamt
European Patent Office
Office européen des brevets

(11) Publication number: **0 091 116**
**B1**

(12) **EUROPEAN PATENT SPECIFICATION**

(45) Date of publication of patent specification: **15.10.86**

(51) Int. Cl.$^4$: **C 08 L 79/08** // (C08L79/08, 79:08)

(21) Application number: **83103298.2**

(22) Date of filing: **05.04.83**

(54) **Polyetherimide blends.**

(30) Priority: **02.04.82 US 364904**

(43) Date of publication of application:
**12.10.83 Bulletin 83/41**

(45) Publication of the grant of the patent:
**15.10.86 Bulletin 86/42**

(84) Designated Contracting States:
**DE FR GB IT NL**

(56) References cited:
**WO-A-81/01568**

(73) Proprietor: **GENERAL ELECTRIC COMPANY**
**1 River Road**
**Schenectady New York 12305 (US)**

(72) Inventor: **White, Dwain Montgomery**
**2334 St.Joseph Drive**
**Schenectady New York 12309 (US)**
Inventor: **Floryan, Daniel Edwin**
**Route 49 Colonial Acres**
**Pittsfield Massachusetts 01201 (US)**
Inventor: **Holub, Fred Frank**
**2263 Preisman Drive**
**Schenectady New York 12309 (US)**

(74) Representative: **Schüler, Horst, Dr. European Patent Attorney et al**
**Kaiserstrasse 41**
**D-6000 Frankfurt/Main 1 (DE)**

**EP 0 091 116 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

From the own earlier publication WO—A—8 101 568 it is already known to blend polyetherimides with polyamideimides in order to get relatively cheap blends without significant sacrifice of properties.

The present invention relates now to a composition comprising a blend of two or more polyetherimides. Such a blend exhibits a high glass transition temperature, e.g. from about 125°C to 210°C, which makes the blends particularly suitable for automotive and appliance applications.

The compositions of the invention comprise a blend of two or more polyetherimides selected from the class consisting of

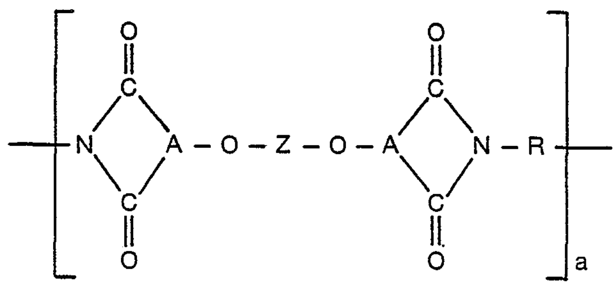

where a represents a whole number in excess of 1, the group —O—A— is selected from

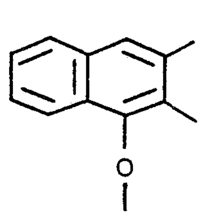

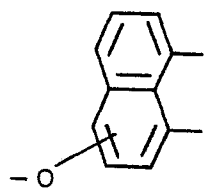

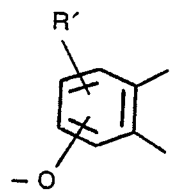

R′ being hydrogen, lower alkyl or lower alkoxy, Z is a member of the class consisting of (1)

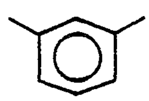

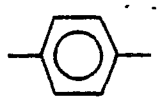

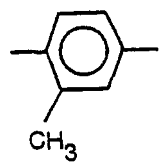

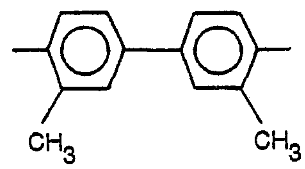

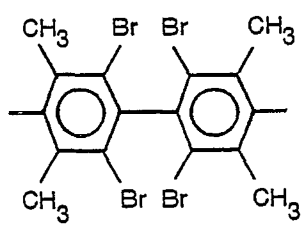

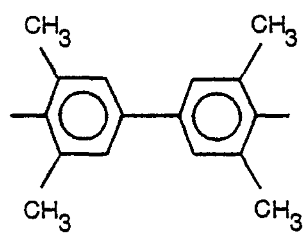

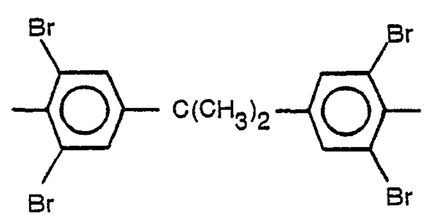

and (2) divalent organic radicals of the general formula:

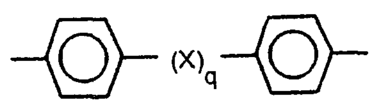

where X is a member selected from the class consisting of divalent radicals of the formulas:

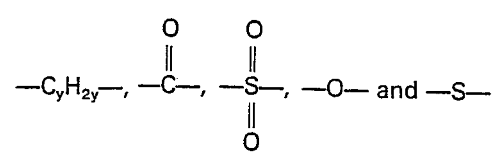

where q is 0 or 1, y is a whole number from 1 to 5 and R is a divalent organic radical selected from the class

consisting of (1) aromatic hydrocarbon radicals having from 6 to 10 carbon atoms and halogenated derivatives thereof, (2) alkylene radicals and cycloalkylene radicals having from 2 to 20 carbon atoms, and $C_{(2-8)}$ alkylene terminated polydiorganosiloxane, and (3) divalent radicals included by the formula:

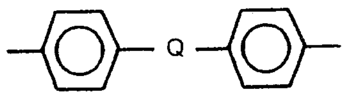

where Q is a member selected from the class consisting of

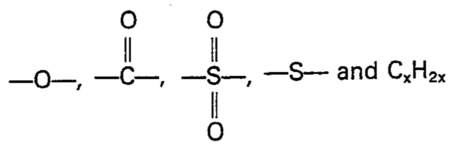

where x is a whole number from 1 to 5 inclusive,
wherein the glass transition temperatures of the component polyetherimides are different and the glass transition temperature of the blend lies between those of the component polyetherimides.

Particularly preferred polyetherimides for the purposes of the present invention include those where —O—A< and Z respectively are:

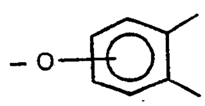

and

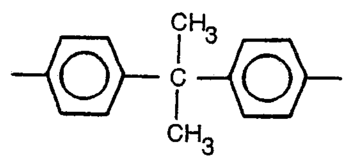

and R is selected from hexamethylene,

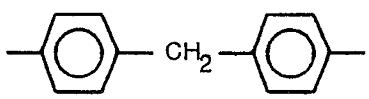

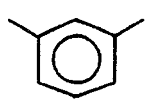

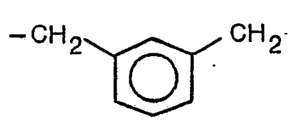

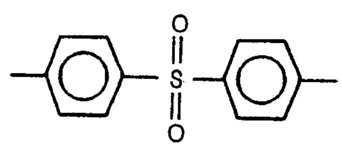

and polyetheramides containing two or more of the R groups.

In such blends the glass transition temperatures of the component polyetherimides are different and the glass transition temperature of the blend lies between those of the component polyetherimides.

Polyetherimides can be obtained by any of the methods well known to those skilled in the art including the reaction of any aromatic bis(ether anhydrides) of the formula

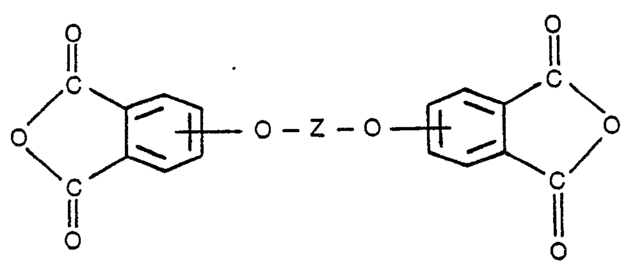

where Z is as defined hereinbefore with an organic diamine of the formula

$$H_2N—R—NH_2$$

where R is as defined hereinbefore.

Aromatic bis(ether anhydride)s of the above formula include, for example, 2,2-bis[4-(2,3-dicarboxyphenoxy)phenyl]-propane dianhydride; 4,4'-bis(2,3-dicarboxyphenoxy)diphenyl ether dianhydride; 1,3-bis(2,3-dicarboxyphenoxy)benzene dianhydride; 4,4'-bis(2,3-dicarboxyphenoxy)diphenyl sulfide dianhydride; 1,4-bis(2,3-dicarboxyphenoxy)benzene dianhydride; 4,4'-bis(2,3-dicarboxyphenoxy)diphenyl sulfone dianhydride; 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 1,3-bis(3,4-dicarboxyphenoxy)benzene dianhydride; 1,4-bis(3,4-dicarboxyphenoxy)benzene dianhydride; 4,4'-bis(3,4-dicarboxyphenoxy)benzophenone dianhydride; 4-(2,3-dicarboxyphenoxy)-4-(3,4-dicarboxyphenoxy)diphenyl 2,2-propane dianhydride; etc., and mixtures of such dianhydrides.

In addition, aromatic bis(ether anhydride)s also included by the above formula are shown by Koton, M.M.; Florinski, F.S.; Bessonov, M.I.; Rudakov, A.P. (Institute of Heteroorganic compounds, Academy of Sciences, U.S.S.R.), U.S.S.R. 257,010, Nov. 11, 1969, Appl. May 3, 1967. In addition, dianhydrides are shown by M. M. Koton, F. S. Florinski, Zh Org. Khin, 4(5), 774 (1968).

Organic diamines of the above formula include, for example, m-phenylenediamine, p-phenylenediamine, 4,4'-diaminodiphenylpropane, 4,4'-diaminodiphenylmethane benzidine, 4,4'-diaminodiphenyl sulfide, 4,4'-diaminodiphenyl sulfone, 4,4'-diaminodiphenyl ether, 1,5-diaminonaphthalene, 3,3'-dimenthylbenzidine, 3,3'-dimethoxybenzidine, 2,4-bis(-amino-t- butyl)toluene, bis(p- amino-t-butylphenyl)ether, bis(p- methyl-o-aminopentyl)benzene, 1,3-diamino-4-isopropylbenzene, 1,2-bis(3-aminopropoxy)ethane, m-xylylenediamine, p-xylylenediamine, 2,4-diaminotoluene, 2,6-diaminotoluene, bis(4-aminocyclohexyl)methane, 3-methylheptamethylenediamine, 4,4-dimethylheptamethylenediamine, 2,11-dodecanediamine, 2,2-dimethylolpropylenediamine, octamethylenediamine, 3-methoxyhexamethylenediamine, 2,5-dimethylhexamethylenediamine, 2,5-dimethylheptamethylenediamine, 3-methylheptamethylenediamine, 5-methylnonamethylenediamine, 1,4-cyclohexanediamine, 1,12-octadecanediamine, bis(3-aminopropyl)sulfide, N-methyl-bis(3-aminopropyl)amine, hexamethylenediamine, heptamethylenediamine, nonamethylenediamine, decamethylenediamine, bis(3-aminopropyl)tetramethyldisiloxane, bis(4-aminobutyl)tetramethyldisiloxane, and the like.

The aromatic bis(ether anhydride) used in making the above-mentioned preferred polyetherimides is 2,2-bis[4-(3,4-dicarboxy phenoxy)phenyl]propane dianhydride (bisphenol A bisphthalic anhydride) and the diamines used are hexamethylene diamine, m-phenylene diamine, m-xylylene diamine, 4,4'-diaminodiphenylmethane and diamino diphenylsulfone.

In general, the reactions can be advantageously carried out employing well-known solvents, e.g., o-dichlorobenzene, m-cresol/toluene, N-methyl-pyrrolidone, etc., in which to effect interaction between the dianhydrides and the diamines, at temperatures of from about 100 to about 250°C. Alternatively, the polyetherimides can be prepared by melt polymerization of any of the above dianhydrides with any of the above diamine compounds while heating the mixture of the ingredients at elevated temperatures with concurrent intermixing. Generally, melt polymerization temperatures between about 200° to 400°C. and preferably 230° to 300°C. Can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mol percent) of diamine can be employed resulting in the production of polyetherimides having terminal amine groups. Monofunctional organic amines such as aniline, or organic anhydrides such as phthalic anhydride and maleic anhydride provide molecular weight control. Low molecular weight polyetherimide can be employed to form copolymers. From 0.1 to 50 mole percent of comonomers based on the total moles of reactants can be employed. Generally, useful polyetherimides have an intrinsic viscosity [η] greater than 0.2 deciliters per gram, preferably 0.35 to 0.60, or 0.7 deciliters per gram or even higher when measured in m-cresol at 25°C.

Included among the many methods of making the polyetherimides are those disclosed in U.S. Patent Nos. Heath et al, 3,847,867, Williams 3,847,869, Takekoshi et al, 3,850,885, White 3,852,242 and 3,855,178, etc. These disclosures are incorporated herein in their entirety by reference for the purpose of teaching, by way of illustration, general and specific methods for preparing polyetherimides suitable for the blends of this invention.

In accordance with the present invention, blends of the polyetherimides are generally obtainable in all proportions of the polyetherimides relative to each other. Consequently, blends comprising from about 1 to about 99%, by weight of one polyetherimide and from about 99 to about 1%, by weight of another polyetherimide are included within the scope of the invention as well as blends of three or more different polyetherimides containing at least about 1% by weight of each of the contained polyetherimides. By controlling the proportions of the various polyetherimides relative to each other, blends having certain predetermined properties which are improved over those of one or more components of the blend alone may be readily obtained. In general, blends of polyetherimides have a good appearance and exhibit a high glass transition temperature such as from 125° to 210°C.

It is contemplated that the polyetherimide blends of the present invention may also include additive materials such as fillers, stabilizers, plasticizers, flexibilizers, surfactant agents, pigments, dyes, reinforcements, flame retardants and diluents in conventional amounts.

Methods for forming polyetherimide blends may vary considerably. Prior art blending techniques are generally satisfactory. A preferred method comprises blending the polymers and additives such as reinforcements in powder, granular or filamentous form, extruding the blend, and chopping the extrudate into pellets suitable for molding by means conventionally used to mold normally solid thermoplastic compositions.

The polyetherimide blends of the present invention have application in a wide variety of physical shapes and forms, including the use as films, molding compounds, coatings, etc. When used as films or when made into molded products, these blends, including laminated products prepared therefrom, not only possess good physical properties at room temperature but they retain their strength and excellent response to workloading at elevated temperatures for long periods of time. Films formed from the blends

of this invention may be used in application where films have been used previously. Thus, the blends of the present invention can be used in automobile and aviation applications for decorative and protective purposes, and as high temperature electrical insulation for motor slot liners, transformers, dielectric capacitors, cable and coil wrappings (form wound coil insulation for motors), and for containers and containers linings. The blends can also be used in laminated structures where films or solutions of the blend are applied to various heat-resistant or other type of materials such as asbestos, mica, glass fiber and the like, the sheets superimposed one upon the other, and thereafter subjecting the sheets to elevated temperatures and pressures to effect flow and cure of the resinous binder to yield cohesive laminated structures. Films made from the subject polyetherimide blends can also serve in printed circuit applications.

Alternatively, solutions of the blends herein described can be coated on electrical conductors such as copper, aluminum, etc. and thereafter the coated conductor can be heated at elevated temperatures to remove the solvent and provide a continuous resinous composition thereon. If desired, an additional overcoat may be applied to such insulated conductors including the use of polymeric coatings, such as polyamides, polyesters, silicones, polyvinylformal resins, epoxy resins, polyimides, polytetrafluoroethylene, etc. The use of the blends of the present invention as overcoats on other types of insulation is not precluded.

Other applications which are contemplated for these blends include their use as binders for asbestos fibers, carbon fibers, and other fibrous materials in making brake linings. In addition, molding compositions and molded articles may be formed from the polymeric blends of the invention by incorporating such fillers as asbestos, glass fibers, talc, clay, quartz powder, finely divided carbon, and metals, silica and the like into the blends prior to molding. Shaped articles may be molded under heat, or under heat and pressure, in accordance with practices well-known in the art.

The following examples illustrate specific polyetherimide blends in accordance with the present invention. In the examples, all parts and percentages are by weight unless otherwise specified.

Example I

Binary polyetherimide blends according to the invention were prepared, formed into blend films and then tested for glass transition temperature.

A first polyetherimide was prepared from the reaction product of essentially equimolar amounts of 2,2-bis[4-(3,4-dicarboxy phenoxy)phenyl] propane dianhydride and m-phenylene diamine produced at elevated temperatures of about 250° to about 300°C. and under nitrogen atmosphere. A test specimen in the form of a solution cast film was tested for glass transition temperature and the results are set forth in the following Table I.

A second polyetherimide was prepared from the reaction product of hexamethylenediamine and 2,2-bis[4-(3,4-dicarboxy phenoxy)phenyl] propane dianhydride and formed into a test specimen as above. The glass transition temperature of this polyetherimide is also set forth in Table I.

About 90 parts of the first polyetherimide in a N-methylpyrrolidone solution were mixed with about 10 parts of the second polyetherimide in a N-methylpyrrolidone solution and the polymer mixture was then solution cast to form a film. The glass transition temperature of the blend film was measured and is given in Table I.

The above blending procedure was then repeated so as to produce six additional blends having varying amounts of the first polyetherimide relative to the second polyetherimide. The glass transition temperature for each of the additional blends is also set forth in Table I. From the data, it can be observed that blends containing from 50 to 70% of the first polyetherimide and 50 to 30% of the second polyetherimide have a glass transition temperature in the range of 165 to 190°C. which makes these blends particularly adaptable for automotive and appliance applications.

TABLE I

| First Polyetherimide Content (%) | Second Polyetherimide content (%) | Glass Transition Temperature (°C) |
|---|---|---|
| 100 | 0 | 222 |
| 90 | 10 | 210 |
| 80 | 20 | 198 |
| 70 | 30 | 189 |
| 60 | 40 | 180 |
| 50 | 50 | 167 |
| 30 | 70 | 138 |
| 10 | 90 | 128 |
| 0 | 100 | 121 |

Example II

Binary polyetherimide blends according to the invention were prepared, formed into blend films and then tested for glass transition temperature.

A first polyetherimide was prepared from the reaction product of essentially equimolar amounts of 2,2-bis[4-(3,4-dicarboxy phenoxy)phenyl] propane dianhydride and m-phenylene diamine produced at elevated temperatures of about 250° to about 300°C. and under nitrogen atmosphere. A test specimen solution coated in the form of a film was tested for glass transition temperature and the results are set forth in the following Table II.

A second polyetherimide was prepared from the reaction product of m-xylene diamine and 2,2-bis[4-(3,4-dicarboxy phenoxy)phenyl] propane dianhydride and formed into a test specimen as above. The glass transition temperature of this polyetherimide is also set forth in Table II.

About 90 parts of the first polyetherimide in a N-methylpyrrolidone solution were mixed with about 10 parts of the second polyetherimide in a N-methylpyrrolidone solution and the polymer mixture was then solution cast to form a film. The glass transition temperature of the blend was measured and is given in Table II.

The above blending procedure was then repeated so as to produce six additional blends having varying amounts of the first polyetherimide relative to the second polyetherimide. The glass transition temperature for each of the additional blends is also set forth in Table II. From the data, it can be observed that blends containing from 10 to 60% of the first polyetherimide and 90 to 40% of the second polyetherimide have a glass transition temperature in the range of 170 to 195°C. which also makes these blends particularly adaptable for automotive and appliance applications.

TABLE II

| First Polyetherimide Content (%) | Second Polyetherimide content (%) | Glass Transition Temperature (°C) |
|---|---|---|
| 100 | 0 | 222 |
| 90 | 10 | 211 |
| 80 | 20 | 208 |
| 70 | 30 | 204 |
| 60 | 40 | 196 |
| 50 | 50 | 185 |
| 30 | 70 | 185 |
| 10 | 90 | 171 |
| 0 | 100 | 168 |

Example III

Polyetherimide blends according to the invention were prepared from a polyetherimide homopolymer and a polyetherimide copolymer. The blends were formed into blend films and then tested for glass transition temperature.

The polyetherimide homopolymer was prepared from the reaction product of essentially equimolar amounts of 2,2-bis[4-(3,4-dicarboxy phenoxy)phenyl] propane dianhydride and m-phenylene diamine produced at elevated temperature of about 250° to about 300°C. and under nitrogen atmosphere. A test specimen solution coated in the form of a film was tested for glass transition temperature and the results are set forth in Table III.

The polyetherimide copolymer was prepared from the reaction product of essentially equimolar amounts of 2,2-bis[4-(3,4-dicarboxy phenoxy) phenyl] propane dianhydride and a mixture of equimolar amounts of m-phenylene diamine and hexamethylene diamine. About 50 parts of the polyetherimide homopolymer were mixed in solution with about 50 parts of the polyetherimide copolymer and the polymer mixture was then solution cast to form a film. The glass transition temperature of the blend film was measured and is given in Table III.

Another polyetherimide copolymer was prepared as above except that the molar ratio of m-phenylene diamine to hexamethylene diamine was about three to one. About 75 parts of the polyetherimide homopolymer were mixed in solution with about 25 parts of the polyetherimide copolymer and the polymer mixture was then solution cast to form a blend film. The glass transition temperature of the blend was measured and is given in Table III.

A further polyetherimide copolymer was prepared as above with the exception that the molar ratio of m-phenylene diamine to hexamethylene diamine was about one to three. About 25 parts of the polyetherimide homopolymer were mixed in solution with about 75 parts of the second polyetherimide copolymer and the polymer mixture was then solution cast to form a blend film. The glass transition temperature of the blend was measured and is given in Table III.

From the data presented in Table III, it can be observed that the polyetherimide homopolymer-copolymer blends have an exceptionally high glass transition temperatures even at high aliphatic amine concentrations, i.e., at high hexamethylene diamine ratios. These high glass transition temperatures give the blends utility as coatings and insulation and as compression and injection molding compounds.

TABLE III

| Polyetherimide Homopolymer Content (%) | Polyetherimide copolymer content (%) | Ratio of m-phenylene diamine to hexamethylene diamine to prepare copolymer | Glass Transition Temperature (°C) |
|---|---|---|---|
| 100 | 0 | — | 223 |
| 75 | 25 | 3:1 | 211 |
| 50 | 50 | 1:1 | 203 |
| 25 | 75 | 1:3 | 198 |

Substitution of other polyetherimides for the polyetherimides of the blends of the above examples may result in the formulation of polyetherimide polymer blends having similar characteristics.

**Claims**

1. A composition comprising: a blend of two or more polyetherimides selected from the class consisting of

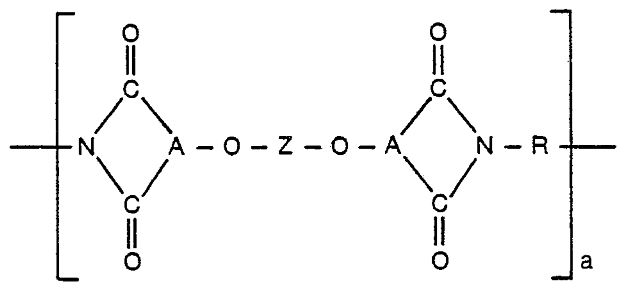

where a represents a whole number in excess of 1, the group —O—A is selected from

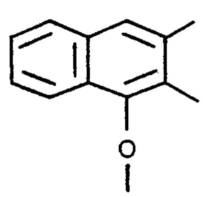

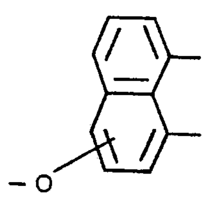

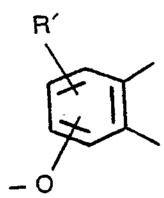

R′ being hydrogen, lower alkyl or lower alkoxy, Z is a member of the class consisting of (1)

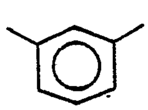

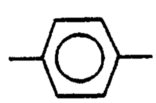

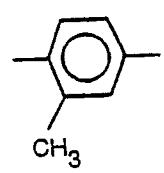

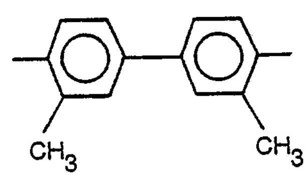

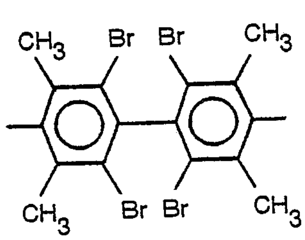

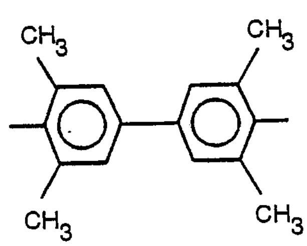

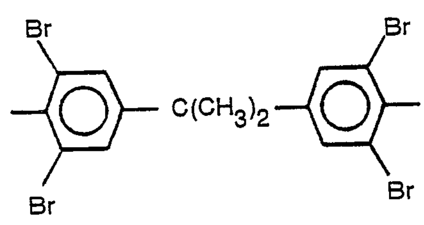

and (2) divalent organic radicals of the general formula:

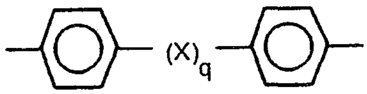

where X is a member selected from the class consisting of divalent radicals of the formulas

$-C_yH_{2y}-$, 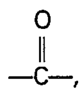, 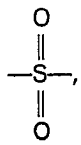, $-O-$ and $-S-$

where q is 0 or 1, y is a whole number from 1 to 5 and R is a divalent organic radical selected from the class consisting of (1) aromatic hydrocarbon radicals having from 6 to 10 carbon atoms and halogenated derivatives thereof, (2) alkylene radicals and cycloalkylene radicals having from 2 to 20 carbon atoms, and $C_{(2-8)}$ alkylene terminated polydiorganosiloxane, and (3) divalent radicals included by the formula

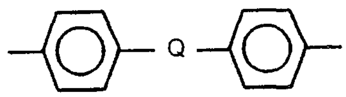

where Q is a member selected from the class consisting of

$-O-$, 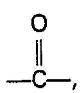, 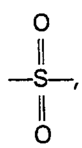, $-S-$ and $C_xH_{2x}$

where x is a whole number from 1 to 5 inclusive, wherein the glass transition temperatures of the component polyetherimides are different and the glass transition temperature of the blend lies between those of the component polyetherimides.

2. A composition comprising a blend of two or more polyetherimides selected from the class consisting of

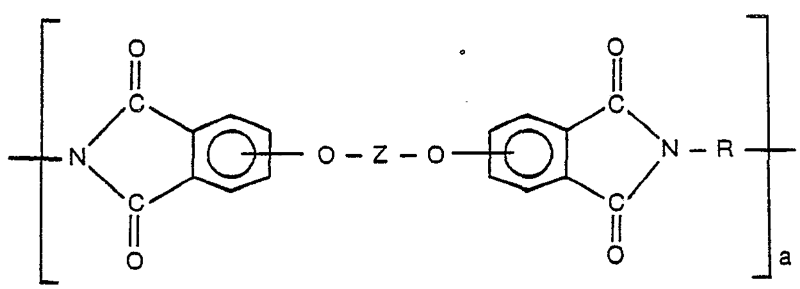

wherein Z is

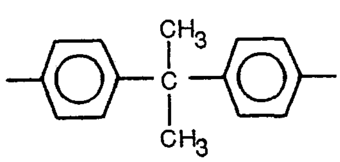

and R is selected from hexamethylene

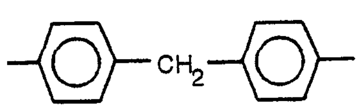 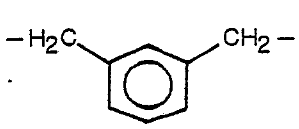 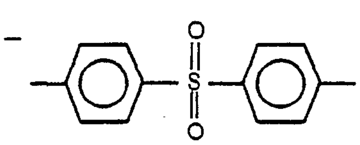 and 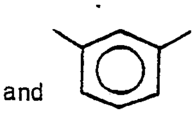

wherein the glass transition temperatures of the component polyetherimides are different and the glass transition temperature of the blend lies between those of the component polyetherimides.

3. A composition in accordance with claim 2 containing a first polyetherimide where R is

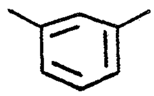.

4. A composition in accordance with claim 3 containing a second polyetherimide where R is hexamethylene.

5. A composition in accordance with claim 4 containing a second polyetherimide where R is

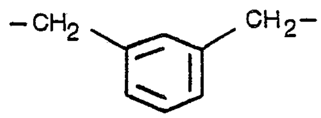

6. A composition in accordance with claim 1 comprising a first and second polyetherimides each formed by the reaction of aromatic bis(ether anhydrides) of the formula

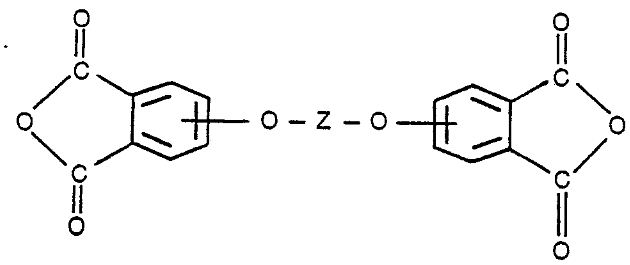

with one or more organic diamines of the formula

$$H_2N—R—NH_2.$$

7. A composition in accordance with claim 6 wherein the bis(ether anhydride) of the first and second polyetherimide is of the formula

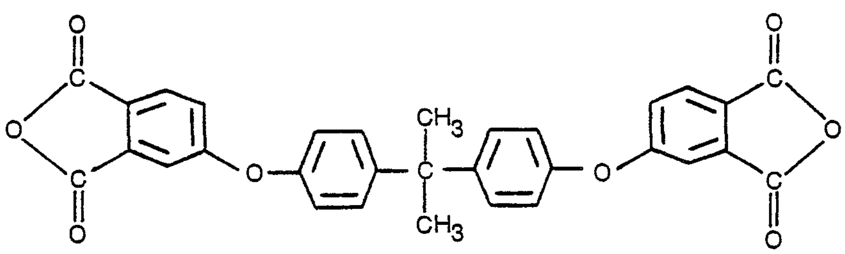

the diamine of the first polyetherimide is

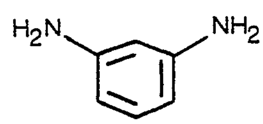

and the diamine of the second polyetherimide is selected from one or more of hexamethylene diamine,

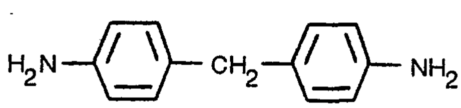

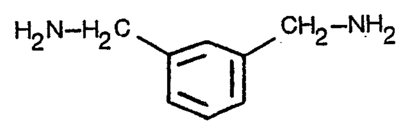

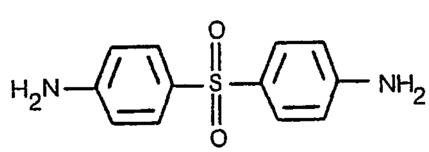

8. A composition in accordance with claim 7, wherein the diamine for the second polyetherimide is hexamethylene diamine and

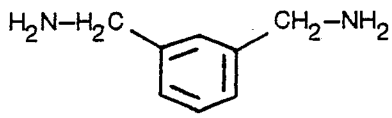

9. A composition in accordance with claim 2 containing one or more fillers.

**Patentansprüche**

1. Zusammensetzung enthaltend: eine Mischung aus zwei oder mehr Polyätherimiden, ausgewählt aus der Klasse bestehend aus

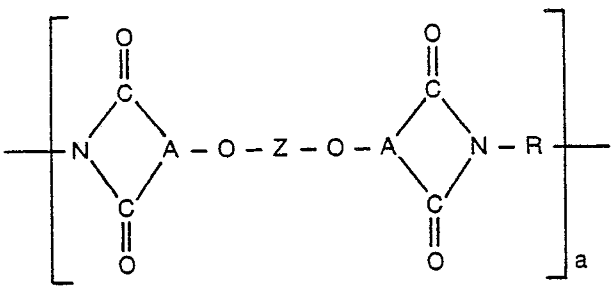

worin a eine ganze Zahl größer als 1 darstellt, die Gruppe —O—A ausgewählt ist aus

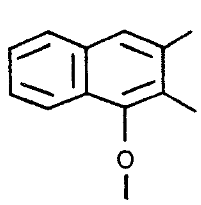

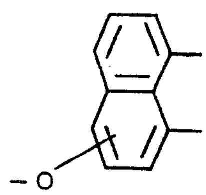

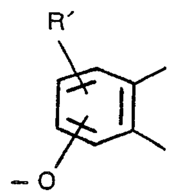

worin R′ Wasserstoff, niederes Alkyl oder niederes Alkoxy ist, Z ein Glied darstellt aus der Klasse bestehend aus (1)

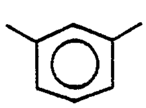

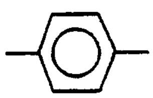

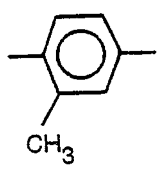

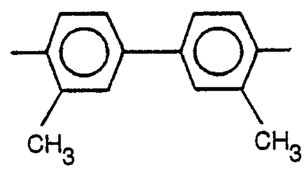

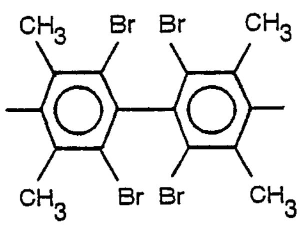

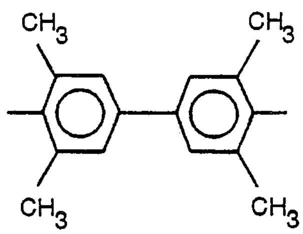

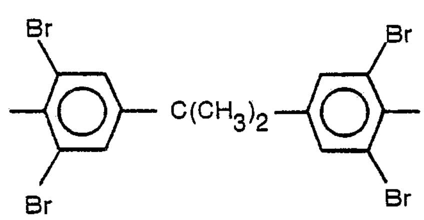

und (2) zweiwertigen organischen Resten der allgemeinen Formel

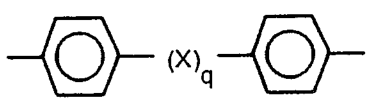

worin X ein Glied ist, ausgewählt aus der Klasse bestehend aus zweiwertigen Resten der Formeln

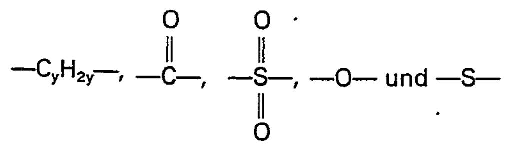

und

worin q 0 oder 1 ist, y eine ganze Zahl von 1 bis 5 darstellt und R ein zweiwertiger organischer Rest ausgewählt aus der Klasse bestehend aus (1) aromatischen Kohlenwasserstoffresten mit 6 bis 10 Kohlenstoffatomen und halogenierten Derivaten derselben, (2) Alkylenresten und Cycloalkylenresten mit 2 bis 20 Kohlenstoffatomen und mit $C_{2-8)}$-Alkylenendgruppen versehenes Organopolysiloxan und (3) zweiwertigen Resten, die von der Formel

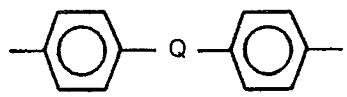

umfaßt werden, worin Q ein Glied ist ausgewählt aus der Klasse bestehend aus

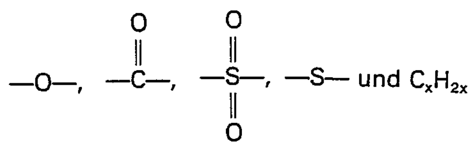

und

worin x eine ganze Zahl von 1 bis 5 einschließlich ist und worin die Glasübergangstemperaturen der Polyätherimidbestandteile unterschiedlich sind und die Glasübergangstemperatur der Mischung zwischen denjenigen der Polyätherimidbestandteile liegt.

2. Zusammensetzung enthaltend eine Mischung aus zwei oder mehr Polyätherimiden, ausgewählt aus der Klasse bestehend aus

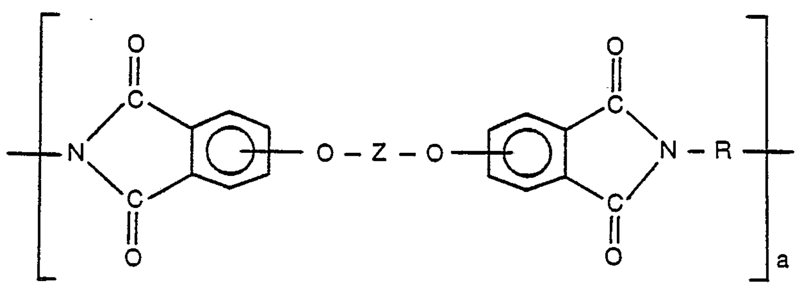

worin Z

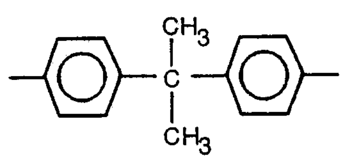

ist und R ausgewählt ist aus Hexamethylen,

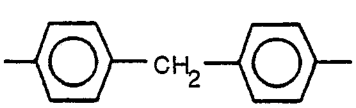

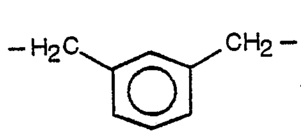

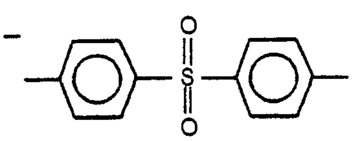

und

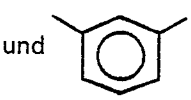

worin die Glasübergangstemperaturen der Polyätherimid-Bestandteile unterschiedlich sind und die Glasübergangstemperatur der Mischung zwischen denjenigen der Polyätherimidbestandteile liegt.

3. Zusammensetzung nach Anspruch 2, enthaltend ein erstes Polyätherimid worin R

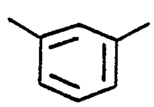

ist.

4. Zusammensetzung nach Anspruch 3, enthaltend ein zweites Polyätherimid, worin R Hexamethylen ist.

5. Zusammensetzung nach Anspruch 4, enthaltend ein zweites Polyätherimid, worin R

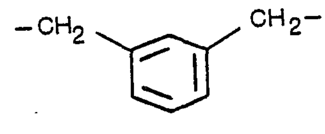

ist.

6. Zusammensetzung nach Anspruch 4, enthaltend ein erstes und ein zweites Polyätherimid, von denen jedes durch Reaktion aromatischer Bis(ätheranhydride) der Formel

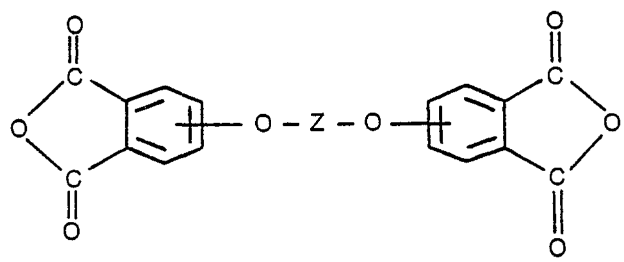

mit einem oder mehreren organischen Diaminen der Formel

$$H_2N—R—NH_2$$

gebildet worden ist.

7. Zusammensetzung nach Anspruch 6, worin das Bis(ätheranhydrid) des ersten und des zweiten Polyätherimids der Formel

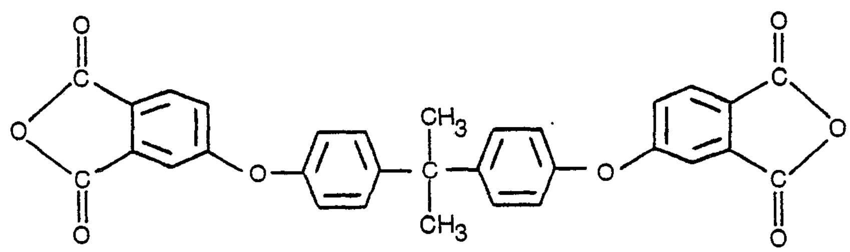

entspricht, das Diamin des ersten Polyätherimides

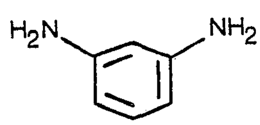

ist
und das Diamin des zweiten Polyätherimids ausgewählt ist aus einem oder mehreren der Hexamethylendiamine:

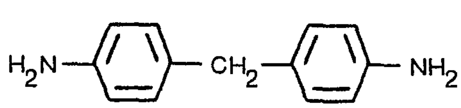

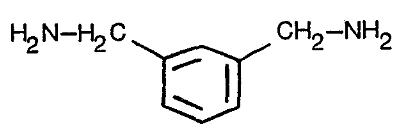

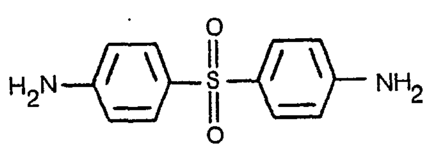

8. Zusammensetzung nach Anspruch 7, worin das Diamin des zweiten Polyätherimids Hexamethylendiamin und

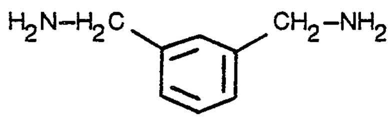

ist.

9. Zusammensetzung nach Anspruch 2, enthaltend einen oder mehrere Füllstoffe.

**Revendications**

1. Composition comprenant: un mélange de deux ou plusieurs polyétherimides choisis dans le groupe constitué par:

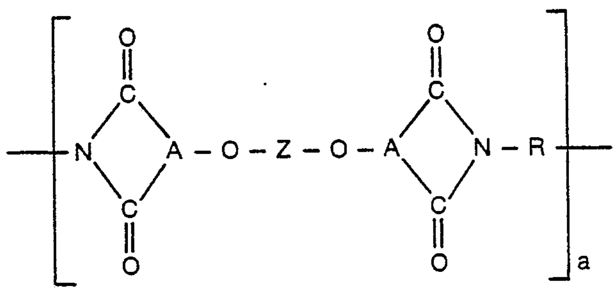

formule dans laquelle a représente un nombre entier supérieur à 1, le groupe —O—A est choisi parmi:

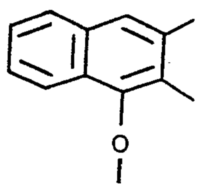 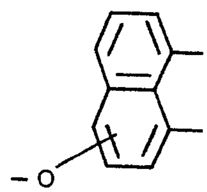 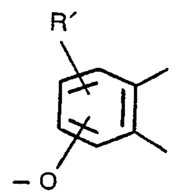

R′ représentant l'hydrogène, un groupe alkyle inférieur ou un groupe alcoxy inférieur, Z représente un élément du groupe constitué par (1)

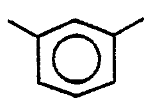 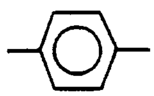 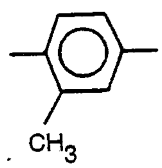 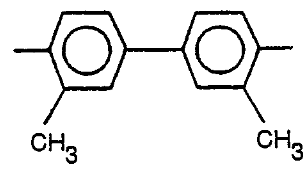

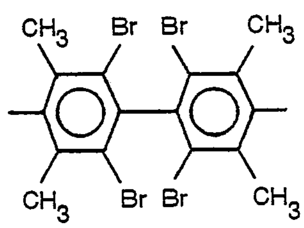 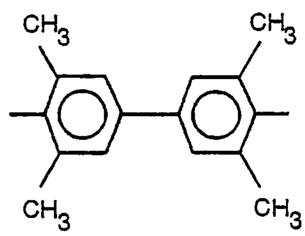 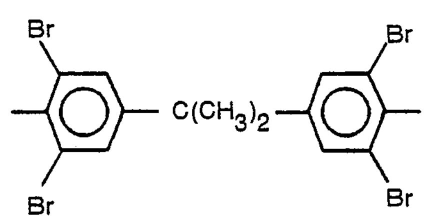

et (2) des radicaux organiques divalents répondant à la formule générale:

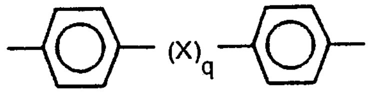

dans laquelle X représente un élément choisi dans le groupe constitué par des radicaux divalents répondant aux formules:

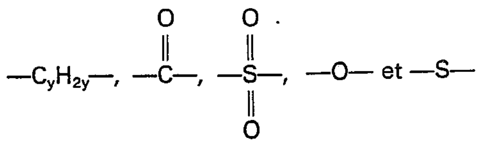

sechant que q est égal à 0 ou à 1, y représente un nombre entier compris entre 1 et 5 et R représente un radial organique divalent choisi dans le groupe constitué par (1) des radicaux hydrocarbonés aromatiques ayant de 6 à 10 atomes de carbone et leurs dérivés halogénés, (2) des radicaux alkylènes et des radicaux cycloalkylènes ayant de 2 à 20 atomes de carbone et un polydiorganosiloxane à terminaisons alkylènes en $C_{(2-8)}$, et (3) des radicaux divalents répondant à la formule:

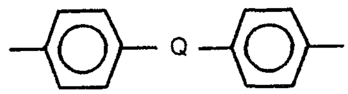

dans laquelle Q représente un élément choisi dans le groupe constitué par:

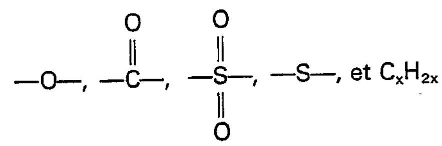

sachant que x représente un nombre entier compris entre 1 et 5 inclus, les températures de transition vitreuse des polyétherimides constituant le mélange étant différentes, et la température de transition vitreuse du mélange étant comprise entre celles des polyétherimides constituant le mélange.

2. Composition comprenant un mélange de 2 ou plusieurs polyétherimides choisis dans le groupe constitué par:

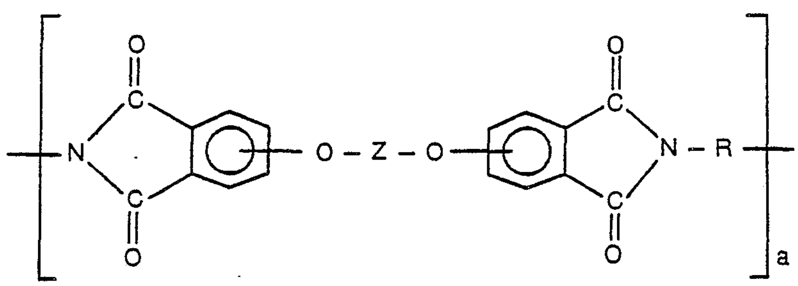

formule dans laquelle Z représente:

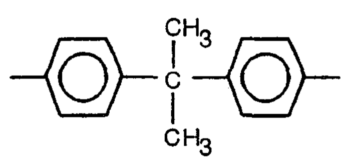

et R est choisi parmi un groupe hexaméthylène,

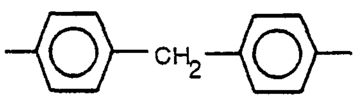 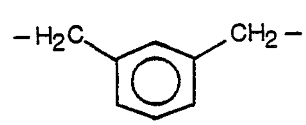 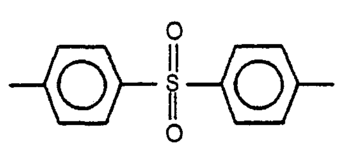 et 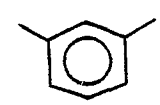

les températures de transition vitreuse des polyétherimides constituant le mélange étant différentes et la température de transition vitreuse du mélange étant comprise entre celles des polyétherimides constituant le mélange.

3. Composition selon la revendication 2, contenant un premier polyétherimide dans lequel R représente

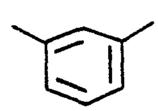

4. Composition selon la revendication 3, contenant un second polyétherimide dans lequel R représente un groupe hexaméthylène.

5. Composition selon la revendication 4 contenant un second polyétherimide dans lequel R représente:

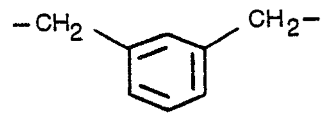

6. Composition selon la revendication 1, comprenant un premier et un second polyétherimides formés chacun par réaction de bis(éther anhydride)s aromatique(s) répondant à la formule

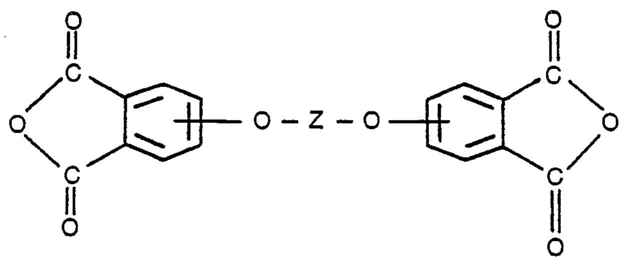

avec une ou plusieurs diamines organiques répondant à la formule:

$$H_2N—R—NH_2$$

7. Composition selon la revendication 6 dans laquelle le bis(éther anhydride) du premier et du second polyétherimides répond à la formule:

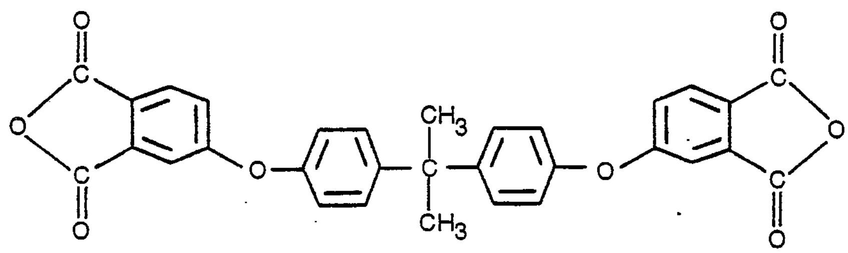

la diamine du premier polyétherimide est

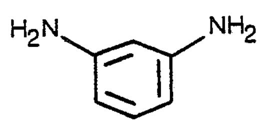

et la diamine du second polyétherimide est choisi parmi un ou plusieurs des éléments du groupe constitué par l'hexaméthylène diamine,

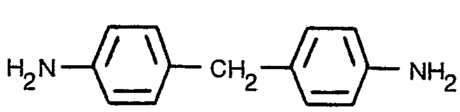

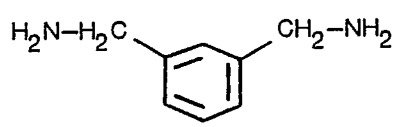

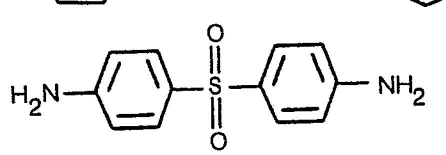

8. Composition selon la revendication 7, dans laquelle la diamine utilisée pour le second polyétherimide est l'hexaméthylène diamine et

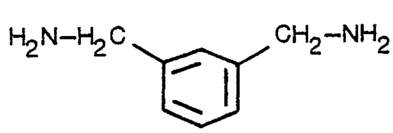

9. Composition selon la revendication 2, contenant une ou plusieurs charges.